# EUROPEAN PATENT APPLICATION

(11) **EP 1 158 712 A1**
(43) Date of publication of application: **28.11.2001**
(21) Application number: 00310735.6
(22) Date of filing: 04.12.2000
(51) Int. Cl.: H04J 14/02

(54) **Optical communication network architectures having reduced loss**

(30) Priority: 25.05.2000 US 578335
(71) Applicant: LUCENT TECHNOLOGIES INC., Murray Hill, New Jersey 07974-0636 (US)
(72) Inventor: Boncek, Raymon K., Lawrenceville, Georgia 30044 (US); Eichenbaum, Bernard Raymond, Basking Ridge, New Jersey 07920 (US); Emery, Gary Patrick, Monmouth Beach, New Jersey 07750 (US); White, Ian A., Dunwoody, Georgia 30338 (US)
(74) Representative: Watts, Christopher Malcolm Kelway, Dr.

(57) **Abstract**

Embodiments of the invention include improved architectures of optical communication systems that use wavelength division multiplexing (WDM) or other multiplexing techniques. The system architectures include a network of primary nodes (12) coupled by suitable optical transmission media (14) and a plurality of sub-networks of secondary nodes (S) coupled to various primary nodes by suitable optical transmission media. At least one of the primary nodes includes a multi-band module (M), and at least one of the primary nodes having a multi-band module includes a subnetwork coupled thereto in which at least one of the secondary nodes in the subnetwork includes either a multi-band module or a single wavelength A/D module. Although the single wavelength A/D modules add and/or drop only single channels, the multi-band modules are capable of simultaneously adding and/or dropping multiple wavelength channels. Thus, the strategic use of primary networks having multi-band modules and sub-networks having multi-band modules or single wavelength A/D modules allows for improved system loss characteristics compared with conventional architectures such as ring architectures, mesh architectures and linear architectures.

## Description

### Background of the Invention

### 1. Field of the Invention

The invention relates to optical communication networks. More particularly, the invention relates to network arrangements or architectures of wavelength division multiplexed (WDM) or other multiplexed optical communication networks.

### 2. Description of the Related Art

Optical communication networks typically are formed by a plurality of nodes coupled directly and/or indirectly by an optical transmission medium such as one or more optical fibers. Many optical networks are configured in either a ring, mesh or linear architecture. Ring architectures typically comprise network nodes coupled to one or two adjacent nodes in a manner that forms a ring topology. Mesh architectures typically comprise many network nodes coupled to more than two other network nodes, thus allowing a transmission signal many possible paths through the network.

In transmission systems using wavelength division multiplexing (WDM) and dense wavelength division multiplexing (DWDM), a plurality of communication channels each centered around different wavelengths and having similar center-to-center spacings (bandwidths) are combined and transmitted simultaneously on a single optical fiber or other optical transmission medium. The number of communication channels depends on the bandwidth of the individual channels and the spacing between the channels. At the receiving end of the system, the channels are separated and supplied to respective receivers.

Within such systems, often it is desirable to add and drop channels at various locations along the system. Thus, typically, WDM and DWDM arrangements include optical add/drop multiplexers (ADMs) or other suitable optical filtering elements for performing routing or directing functions such as inserting and removing individual optical channels or groups of optical channels at various locations throughout the network. Such locations typically are referred to as optical drop/add sites or nodes. In this manner, the optical information of individual channels is routed to another node, or dropped to a receiver at that node, or added to the fiber from a transmitter at that node.

Conventional add/drop components include, for example, passive optical add/drop filters such as Mach-Zehnder interferometers, Fabray-Perot filters and Bragg grating components. Conventional add/drop filters typically are fabricated to add and/or drop information at a particular wavelength or group of wavelengths or, more recently, are made to be tunable to a particular wavelength or group of wavelengths.

However, add/drop filters introduce optical loss into the path of the optical channels being added or dropped. Moreover, optical loss is introduced at the add/drop nodes into the path of the other channels passing through the optical filters. That is, even optical channels that are not being added or dropped are subject to optical loss at the add/drop nodes.

Such loss is especially troublesome for network arrangements such as ring architectures. In such arrangements, optical information transmitted from one network node to another must pass through (and be subject to optical loss) at every network node along the network ring between the transmitting node and the receiving node.

Furthermore, existing optical networks including those having ring architectures are relatively inflexible in terms of operating downtime during network maintenance or network upgrades. For example, in a ring architecture, the inoperability of a single network node often shuts down the entire network. Also, the addition of new network nodes often requires the entire network to be taken offline while the new nodes are added.

It would be desirable to have available network architectures with reduced loss and increased flexibility compared to conventional network arrangements, and to have methods of transmitting optical information through such improved optical network architectures.

### Summary of the Invention

The invention is as defined by the claims. Embodiments of the invention include improved architectures of optical communication systems that use wavelength division multiplexing (WDM) or other multiplexing techniques. The system architectures include a network of primary nodes coupled by suitable optical transmission media and a plurality of sub-networks of secondary nodes coupled to various primary nodes by suitable optical transmission media. At least one of the primary nodes includes a multi-band module (MBM), and at least one of the primary nodes having a multi-band module includes a sub-network coupled thereto in which at least one of the secondary nodes in the sub-network includes either a multi-band module or a single wavelength A/D module. Although the single wavelength A/D modules add and/or drop only single channels, the multi-band modules are capable of simultaneously adding and/or dropping multiple wavelength channels.

The system architectures according to embodiments of the invention improve the loss characteristics of the system arrangements compared with conventional architectures such as ring architectures and mesh architectures. The loss characteristics are improved, for example, by reducing the number of nodes that optical information must travel through between a transmitting location within the system and a receiving location within the system. Also, system architectures according to embodiments of the invention allow for regions of the communication network to be repaired or upgraded without requiring disablement of the entire network.

### Brief Description of the Drawings

In the drawings:
Fig. 1 is a schematic diagram of an optical communication network according to an embodiment of the invention;
Fig. 2 is a schematic diagram of a single wavelength A/D module;
Fig. 3 is a schematic diagram of a multiple wavelength A/D module or multi-band module (MBM);
Fig. 4 is a schematic diagram of a conventional optical communication network having a ring architecture;
Fig. 5 is a schematic diagram of a portion of an optical communication network being upgraded according to embodiments of the invention; and
Figs. 6a-b are schematic diagrams showing multiple wavelength A/D modules in various linear filtering arrangement according to alternative embodiments of the invention.

### Detailed Description

In the following description similar components are referred to by the same reference numeral in order to enhance the understanding of the invention through the description of the drawings.

Although specific features, configurations and arrangements are discussed hereinbelow, it should be understood that such is done for illustrative purposes only. A person skilled in the relevant art will recognize that other steps, configurations and arrangements are useful without departing from the spirit and scope of the invention.

Fig. I illustrates an optical communication system 10 in which embodiments of the invention are useful. For purposes of discussion herein, an optical communication system relates to or includes any network or group of networks that uses optical signals to convey information across an optical transmission medium, for example, an optical fiber. Such optical systems include but are not limited to telecommunication systems, cable television systems and local area networks (LANs).

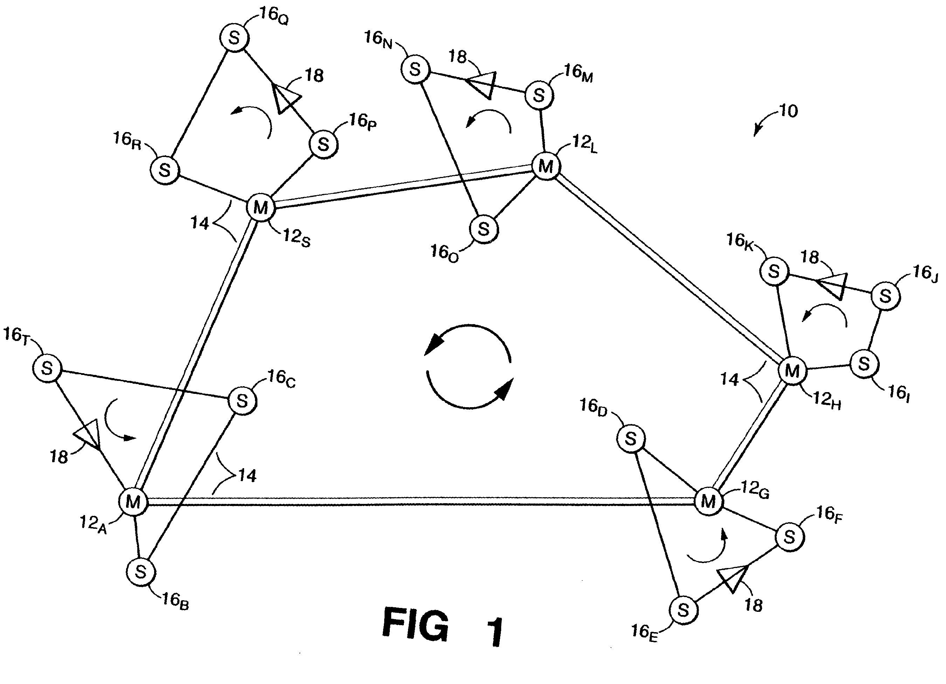

The optical communication system 10 shown in Fig. 1 uses, for example, a wavelength division multiplexed (WDM), dense wavelength-division-multiplexed (DWDM) or other suitable multiplexed scheme. The optical communication system 10 has a plurality of primary nodes 12 coupled by an optical transmission medium 14 such as optical fiber to form a first or primary network. For example, in the communication system 10 shown, the primary network is defined by primary nodes 12_{A}, 12_{G}, 12_{H}, 12_{L} and 12_{S}.

Also, the optical communication system 10 includes a plurality of secondary or sub-network nodes 16 coupled by additional optical transmission media to the primary nodes to form separate, secondary networks or sub-networks. The sub-networks also include an optical amplifier 18, for example, an erbium doped fiber amplifier (EDFA), a Raman amplifier or a semiconductor optical amplifier (SOA), operably coupled therein.

Although the optical communication system 10 is shown configured in such a way that the primary network has a ring architecture and the secondary networks have ring architectures, it should be noted that embodiments of the invention are useful in other network architectures, including, for example, mesh architectures and linear architectures.

The primary nodes 12 and the secondary or sub-network nodes 16 are used, for example, as add/drop sites within the network 10. According to embodiments of the invention, one or more of the primary nodes 12 includes a multiple wavelength A/D module or multi-band module (MBM), denoted by the letter "M". The multiple wavelength A/D modules are configured to add and/or drop more than one channel simultaneously from the WDM optical transmission medium. The MBM is compared with a more conventional single wavelength A/D module, which adds and/or drops only a single optical channel at a given time. The use of MBMs at strategic locations in optical communication networks having, for example, ring architectures, provides a number of features often lacking in conventional optical communication systems. As will become apparent from further discussions hereinbelow, such features include reduced loss within the system, improved system flexibility in terms of maintenance and upgrades, and an enhanced ability to test and monitor signals without disruption of existing signal transmission.

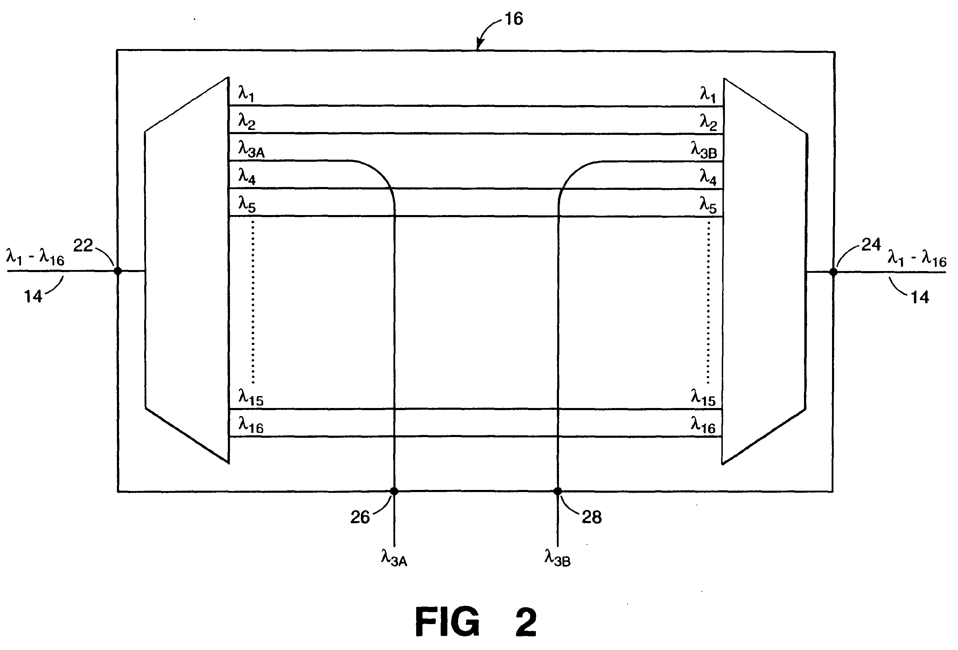

Referring now to Fig. 2, shown is a schematic diagram of a conventional single wavelength A/D module 16 coupled between a pair of segments of optical transmission medium 14. The single wavelength A/D module 16 includes an input port 22 and an output port 24, both coupled to the output transmission medium 14, as shown. Also, the module 16 includes a drop port 26 tuned or otherwise configured to filter out a particular wavelength and a corresponding add port 28 that, in operation, couples to an alternate source of optical information that transmits optical information to be multiplexingly added to the output optical transmission medium 14.

A multiplexed optical signal having optical information from a plurality of channels (shown generally as wavelengths λ₁, λ₂, λ₃, λ₄,..., λ₁₆) is transmitted into the module 16 via an input segment of the optical transmission medium 14 and the input port 22. The drop port 26 filters out one of the channels (for example, the third channel λ_{3A}) and the add port 28 correspondingly adds information from a different optical channel (for example, channel λ_{3B}) which operates at the same nominal wavelength but carries different information than the dropped channel λ_{3A}. Thus, the optical information entering the module 16 via its input port 22 contains optical information from channels λ₁, λ₂, λ_{3A}, λ₄,..., λ₁₆ and the optical information leaving the module 16 via its output port 28 contains optical information from channels λ₁, λ₂ λ_{3B}, λ₄,...,λ₁₆.

As mentioned previously herein, the signal loss associated with network node modules such as add/drop modules contributes loss in addition to conventional fiber attenuation losses. For example, a channel signal incurs loss as it enters and leaves the network, that is, as the channel signal is dropped from or added to the plurality of multiplexed WDM channels transmitted through the optical network. Such loss is referred to, for example, as in/out loss. Also, the channel information incurs loss as it passes through a node having a single wavelength add/drop module 16, even if a channel thereon is not dropped therefrom or added thereto. Such loss is referred to, for example, as bypass loss.

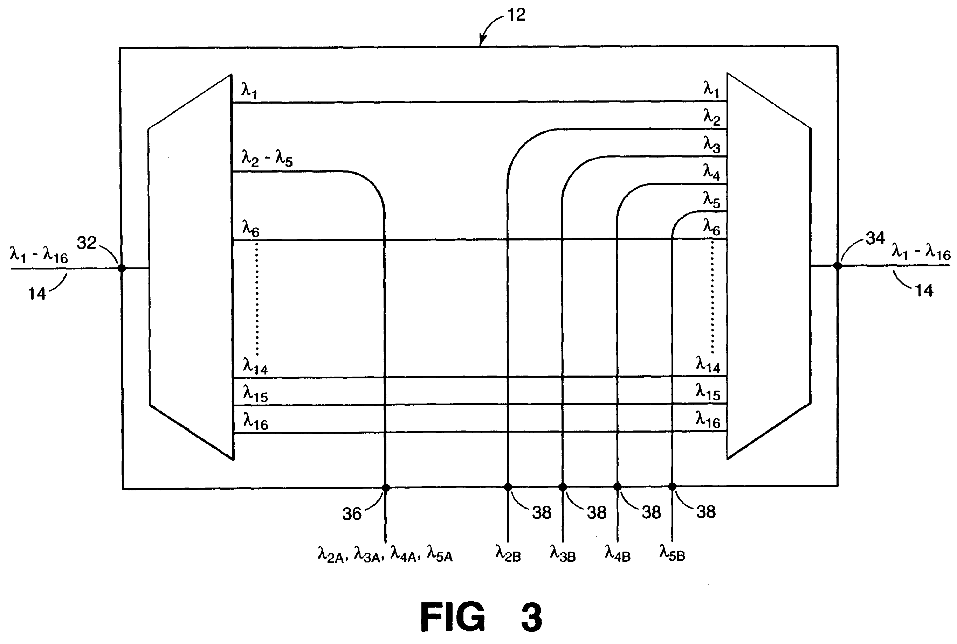

Referring now to Fig. 3, by comparison, a schematic diagram of a multiple wavelength A/D module (MBM) 12 is shown coupled between a pair of segments of optical transmission media 14. Similar to the single wavelength A/D module 16, the MBM 12 includes an input port 32 coupled to an input segment of the optical transmission medium 14 and an output port 34 coupled to an output segment of the transmission medium 14. The MBM 12 typically has a drop port 36 configured to drop a plurality of optical channels (for example, channels λ₂, λ₃ λ₄, λ₅), rather than just a single optical channel as in the single wavelength A/D module 16 discussed hereinabove. Also, the MBM 12 has a plurality of add ports 38 configured to add or provide a corresponding plurality of optical channels, rather than just one optical channel.

Typically, the MBMs 12 filter a relatively broad (for example, ≥ 50 nm) plurality of wavelengths from a continuous range of wavelengths that often are within the same wavelength region, for example, the 1550 nanometer (nm) region, which generally is within the range from approximately 1530 nm to approximately 1565 nm. However, it is possible for the MBM 12 to add and/or drop wavelengths from a noncontinuous or segmented range of wavelengths within the same wavelength region. Also, it is possible for the plurality of wavelengths to be added and/or dropped from different wavelength regions. Other regions include, for example, the 1310 nm region, which typically is from approximately 1260 nm to approximately 1360 nm, and, with the advent of AllWave® fiber from Lucent Technologies, Inc., the 1400 nm region, which typically is from approximately 1360 nm to approximately 1450 nm.

For example, as shown in Fig. 3, optical information from a plurality of channels using WDM techniques (for example, wavelengths λ₁, λ₂, λ₃,λ₄,λ₅,λ₆,..., λ₁₄, λ₁₅, λ₁₆) is transmitted into the multi-band module 12 via an input segment of the input optical transmission medium 14 and the input port 32. The drop ports 36 filter out a group of channels, for example, from a similar range or window of wavelengths or, alternatively, from different wavelength windows. Similarly, the add ports 38 are configured to couple to a corresponding group of channels, for example, from an alternate source.

For example, assuming that channels λ₁- λ₈ have wavelengths within one operating window (for example, the 1310 nm window) and channels λ₉ - λ₁₆ have wavelengths within a different operating window (for example, the 1400 nm window), the drop ports 36 might filter out a first group of channels (for example, channels λ_{2A}, λ_{3A}, λ_{4A} and λ_{5A}) all from the same window (for example, the 1400 nm window). The add ports 38 provide information from a group of different but corresponding channels (for example, channels λ_{2B}, λ_{3B}, λ_{4B} and λ_{5B}). In this manner, the channel information entering the MBM 12 via its input port 32 contains optical information from channels λ₁, λ_{2A}, λ_{3A}, λ_{4A}, λ_{5A}, λ₆, λ₇,..., λ₁₆ and the optical information leaving the module 12 via its output port 34 contains optical information from channels λ₁, λ_{2B}, λ_{3B}, λ_{4B}, λ_{5B}, λ₆, λ₇,..., λ₁₆.

Alternatively, it is possible for the module 12 to be configured in such a way that the drop ports 36 filter out a group of channels from different windows and the add ports 38 provide channel information from a corresponding group of channels. That is, in an alternative embodiment, the drop ports 36 are configured to filter out, for example, channels λ₁ and λ₂ from the first window and channels λ₁₂ and λ₁₃ from the second window. Similarly, the add ports 38 add channel information from a corresponding group of channels. Thus, depending on the particular configuration of the MBM 12, various filtering arrangements and/or combinations are possible.

Moreover, although the MBM 12 is described herein as being configured to add/drop 4 of 16 optical channels, it is within the scope of embodiments of the invention to configure a MBM capable of adding and/or dropping any size group of optical channels to and from an optical signal having any suitable number of optical channels. As discussed hereinabove, the number of optical channels within the multiplexed optical signal depends on, inter alia, the bandwidth of the individual channels and the spacing therebetween.

Similar to the loss contributed by the single wavelength A/D module 16, as shown in Fig. 2 and discussed hereinabove, the MBM 12 shown in Fig. 3 also contributes loss to signals that enter and leave the MBM 12. For example, optical information transmitted through the optical network 10 incurs in/out loss as channels are dropped therefrom or added thereto. Also, optical information incurs bypass loss as it passes through a node having a MBM.

According to embodiments of the invention, the use of multiple wavelength A/D modules or multi-band modules (MBMs) in optical communication networks provides a number of features including reduced loss within the system, improved system flexibility in terms of maintenance and upgrades, and improved testing and monitoring capabilities without disruption of existing signal transmission. Suitable uses include but are not limited to long haul, regional and/or metropolitan optical networks, and local area or enterprise optical networks having multi-node WDM optical links. The MBMs are located throughout such links in locations such as central offices, controlled environment vaults, splice locations, building cable entrance facilities, remote cabinets and inside-building cabling. Embodiments of the invention also are useful with specialty fibers and devices.

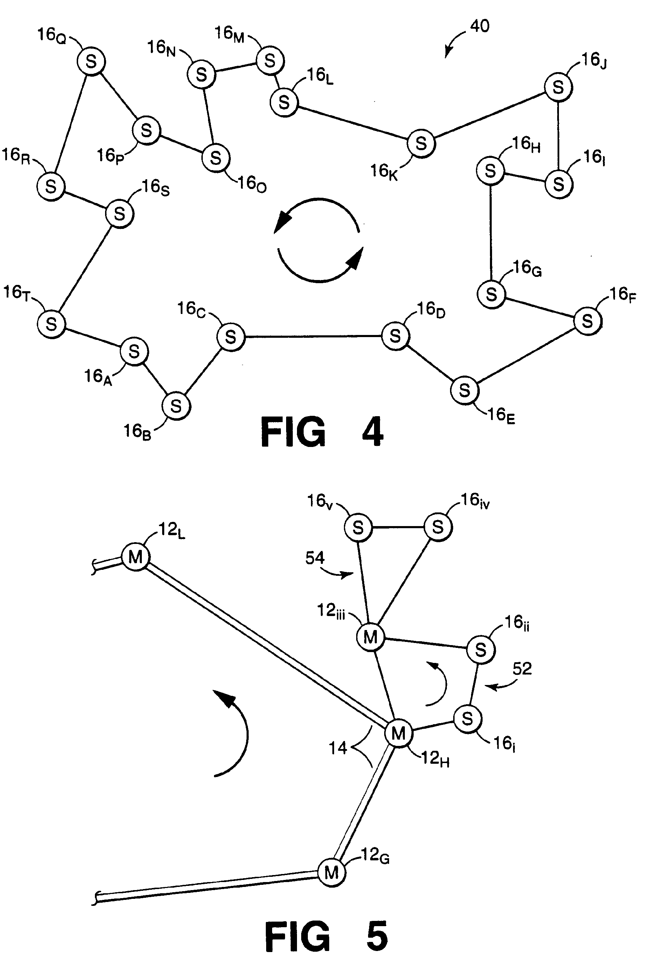

Referring now to Fig. 4, shown is a schematic diagram of a conventional optical communication network 40 having a ring architecture. The conventional network 40 includes a plurality of nodes, for example, 16_{A}-16_{T}, coupled together by a plurality of segments of optical transmission medium 14. The nodes are used, for example, as add/drop sites for single wavelength A/D modules (denoted by the letter "S"). The ring arrangement is such that each node 16 is connected only to adjacent nodes via a single segment of the optical transmission medium 14. Thus, information transmission between any two nodes must pass through all the nodes coupled therebetween.

In operation, a multiplexed optical signal, for example, having channels λ₁, λ₂, λ₃, λ₄, λ₅, λ₆,...., λ₁₄, λ₁₅, λ₁₆, is transmitted around the ring network 40. Various single wavelength A/D modules at the nodes 16 are tuned or otherwise configured to filter a single channel, for example, in a conventional manner. For example, the A/D module at a first node (shown generally as node 16_{A}) is tuned to filter out one of the channels (for example, channel λ₅), while the A/D module at a second node (shown generally as node 16_{B}) is tuned to filter out a different channel (for example, channel λ₉). Similarly, the A/D module at the particular node controls the insertion of channel information at the nominal wavelength of the dropped channel. Thus, as the multiplexed plurality of channel information travels around the ring network 40, individual add/drop sites drop and/or insert optical information at the particular channel or wavelength for which the node 16 at the A/D module at the site is tuned.

As discussed hereinabove, a relatively small amount of loss or attenuation of the signal occurs at many locations between the transmission source and the receiver. Thus, in the conventional ring architecture shown in Fig. 4, information transmission between a transmitter and receiver is subject to bypass loss at every node the information passes through, that is, every node between the node containing the transmitter and the node containing the receiver. Moreover, the transmitted information is subject to in/out loss at the transmitter and receiver nodes. All of this loss is in addition to the usual fiber loss, that is, loss due to scattering and absorption by the optical transmission media itself.

For example, for an optical transmission from the first node 16_{A} to, for example, node 16K, the optical signal would be subject to bypass loss from the nine (9) nodes between nodes 16_{A} and 16_{K} (that is, nodes 16_{B} through 16_{J}). Also, the optical signal would be subject to in/out loss from nodes 16_{A} and 16_{K}. In another example, for optical transmission from node 16_{A} to a node further along on the ring, such as a node 16_{Q}, the optical signal would be subject to bypass loss from the fifteen (15) nodes between nodes 16_{A} and 16_{Q} (that is, nodes 16_{B} through 16_{P}). Also, the optical signal would be subject to in/out loss from nodes 16_{A} and 16_{Q}.

However, according to embodiments of the invention, multi-band modules (MBMs) are used at various locations in optical communication networks to reduce the amount of loss transmitted signals are subject to. More specifically, according to embodiments of the invention, communication systems that conventionally would be arranged, for example, as ring architectures, are configured to have a primary network formed by a plurality of primary nodes and at least one secondary network or sub-network operably coupled to a primary node. For example, referring back to the inventive arrangement shown in Fig. 1, the primary nodes include a MBM to filter a group of optical channels, and sub-networks coupled thereto subsequently are filtered out individually within the sub-network by single wavelength A/D modules or other suitable elements.

In operation, a multiplexed optical signal having a plurality of channels, for example, channels λ₁, λ₂, λ₃, λ₄, λ₅, λ₆,..., λ₁₄, λ₁₅, λ₁₆, is transmitted around the network 10. The MBMs (denoted by the letter "M") at the primary nodes 12 are tuned or otherwise configured to filter out a group of channels to be further filtered out as individual channels within the sub-network coupled to the particular primary node. For example, a first MBM node (shown generally as 12_{A}) is configured to filter out a first group of channels (for example, channels λ₁, λ₂ and λ₃) from channels λ₁-λ₁₆. Similarly, a second MBM node (shown generally as 12_{G}) is configured to filter out a second group of channels (for example, channels λ₆, λ₈ and λ₁₀) from channels λ₁-λ₁₆. As discussed previously herein, the MBMs are configured to filter a group of channels, whether the group of channels be contiguous, for example, channels λ₁, λ₂ and λ₃, or non-contiguous, for example, channels λ₆, λ₈ and λ₁₀.

Once the MBM filters out the group of channels at the primary node 12, the filtered group of channels is transmitted within the corresponding sub-network. That is, in the example discussed hereinabove, the group of channels λ₁, λ₂ and λ₃ filtered out at the primary node 12_{A} is transmitted within the sub-network defined by the primary node 12_{A} and the corresponding single wavelength A/D nodes, that is, secondary nodes 16_{B}, 16_{C} and 16_{T}. The sub-network single wavelength A/D modules at those respective sub-network nodes, in turn, are configured to filter out specific, individual channels from the previously filtered group of channels λ₁, λ₂ and λ₃. For example, node 16_{B} filters out channel λ₁, node 16_{C} filters out channel λ₂, and node 16_{T} filters out channel λ₃. The other sub-networks are configured similarly. For example, the group of channels filtered out at the primary node 12_{G} (individual channels λ₆, λ₈ and λ₁₀) is transmitted within the sub-network defined by the primary node 12_{G} and the corresponding secondary nodes (that is, nodes 16_{D}, 16_{E} and 16_{F}). Also, the single wavelength A/D modules at the sub-network nodes 16_{D}, 16_{E} and 16_{F} are configured to filter out specific, individual channels from the previously filtered group of channels λ₄,λ₅ and λ₆.

The inventive arrangements including sub-networks also provide for improved amplification, as optical amplifiers 18 are coupled to the individual sub-networks and independently amplify the band of channels separated by the MBM. In this manner, amplifiers independently amplify a much narrower range of wavelengths than in conventional arrangements, often resulting in more linear response and thus more accurate and effective amplification. Also, the separation afforded by the inventive arrangements allows for monitoring and testing operations within the sub-network (including the insertion of such equipment) without disturbing the primary network and the other sub-networks.

Although Fig. 1 shows all primary nodes being denoted as having a multi-band module therein and having sub-networks coupled thereto, and shows all nodes in the various sub-networks being denoted as having a single wavelength A/D module therein, such is not required. However, according to embodiments of the invention, at least one of the primary nodes includes a multi-band module, and at least one of the primary nodes having a multi-band module includes a sub-network coupled thereto in which at least one of the secondary nodes in the sub-network includes either a multi-band module or a single wavelength A/D module. That is, it is possible to couple a MBM to a primary node MBM, thus creating at least one additional sub-network.

For example, see Fig. 5, in which a first sub-network 52 (defined by primary node 12_{H} and secondary nodes 16ᵢ, 16ᵢᵢ and 16ᵢᵢᵢ) has another sub-network 54 (defined by nodes 12ᵢᵢᵢ, 16ᵢᵥ and 16ᵥ) coupled thereto. In this manner, the network arrangement has greater flexibility that conventional network arrangements, for example, in terms of increasing capacity through the addition of nodes and the convenience associated with increasing capacity. For example, the rest of the primary network (for example, including primary nodes 12_{H} and 12_{L}) is not disturbed while the sub-network nodes - are added. In conventional ring architectures, the entire network often must be shut down while additional network nodes are incorporated into the arrangement. According to embodiments of the invention, initial installation of MBMs provides at least the underlying structure for future upgrades without current or future disruption to the system.

The improved flexibility of network arrangements according to embodiments of the invention also applies, for example, for repair or replacement of existing nodes, or other occasions when one or more nodes must be rendered inoperable. Again, in conventional network arrangements, often the entire network must be shut down to repair or replace one or more of the network nodes. In network arrangements according to embodiments of the invention, usually only a single node or a single sub-network is affected during node repair or replacement, unless the node needing repair or replacement is a primary node.

Although network architectures according to embodiments of the invention use additional optical transmission media for establishing the sub-ring architecture coupled to the primary ring, such additional optical transmission media is relatively small. For example, typical networks configured according to embodiments of the invention use less than approximately 10% additional optical transmission media throughout the entire system.

The strategic use of MBMs in the sub-network arrangements according to embodiments of the invention reduces loss compared to conventional optical communication network arrangements. For example, the number of network nodes and the arrangement thereof in the inventive arrangement of Fig. 1 are similar to the conventional ring architecture connecting the network nodes in Fig. 4. However, optical signals transmitted throughout the inventive arrangement generally are subject to less optical loss than in the Fig. 4 conventional arrangement.

For example, as discussed hereinabove, optical transmission from the node 16_{A} to the node 16_{K} in the conventional arrangement of Fig. 4 is subject to bypass loss from nine (9) nodes therebetween and in/out loss from nodes 16_{A} and 16_{K}. However, optical transmission from the node 12_{A} to the node 16_{K} in the inventive arrangement of Fig. 1 is subject to bypass loss from only two (2) nodes therebetween and in/out loss from nodes 12_{A} and 16_{K}. That is, in the inventive arrangement, optical transmissions from node 12_{A} to node 16_{K} pass from node 12_{A} to node 12_{G} to node 12_{H} and then to node 16_{K}. In the conventional ring arrangement, optical transmissions from node 16_{A} to node 16_{K} pass through every node between node 16_{A} and node 16_{K}. Thus, according to embodiments of the invention, the inventive sub-network arrangements made possible by multi-band modules significantly reduces the bypass loss introduced to optical transmissions throughout the network.

Also, for example, as discussed hereinabove in conjunction with the conventional ring arrangement of Fig. 4, optical transmission from the node 16_{A} to, for example, the node 16_{R} is subject to bypass loss from each of the sixteen (16) nodes therebetween and in/out loss from nodes 16_{A} and 16_{R}. However, optical transmission from the node 12_{A} to the node 16_{R} in the inventive arrangement of Fig. 1 includes passage from node 12_{A} to node 12_{G} to node 12_{H} to node 12_{L} to node 12ₛ and then to node 16_{R}. Thus, optical transmission from the node 12_{A} to the node 16_{R} in the inventive arrangement is subject to bypass loss from only four (4) nodes and in/out loss from nodes 12_{A} and 16_{R}. Accordingly, in the manner just discussed, inventive network arrangement according to embodiments of the invention generally reduce the amount of optical loss introduced to optical transmissions through the network.

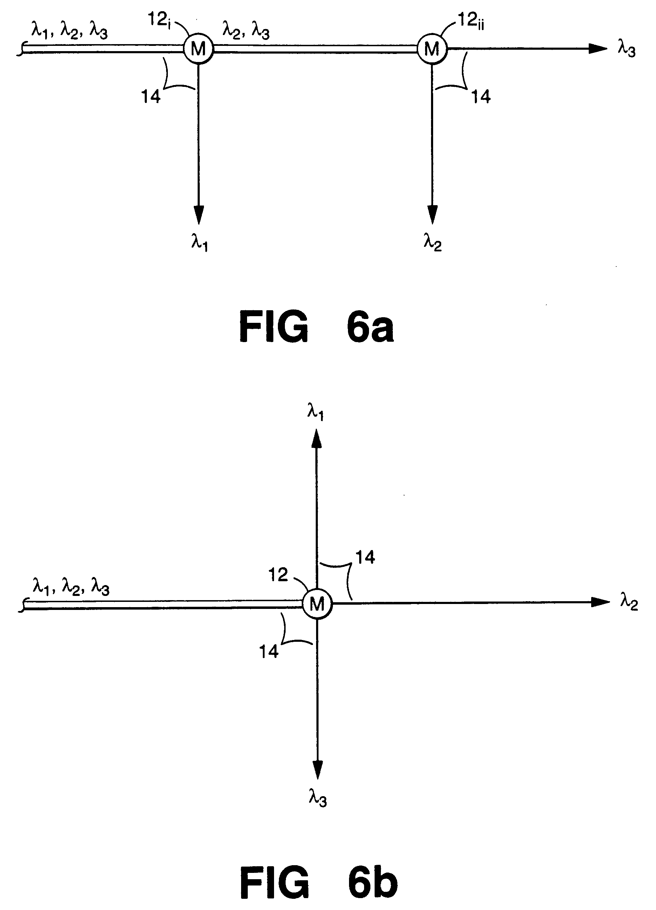

Referring now to Figs. 6a-b, in accordance with alternative embodiments of the invention, shown are network arrangements with various uses of multi-band modules or other elements capable of filtering more than one optical channel simultaneously from a multiplexed optical signal. In Fig. 6a, a first MBM 12ᵢ and a second MBM 12ᵢᵢ are connected in a linear tapering arrangement. For example, as shown, the first MBM 12ᵢ filters a first channel or group of channels λ₁-λ₃ from a multiplexed plurality of channels λ₁-λ₁₆ and the second MBM 12ᵢᵢ further filters a second channel or group of channels λ₅, λ₇, and λ₉-λ₁₁ from the filtered multiplexed plurality of channels. In Fig. 6b, a MBM 12 is shown in an arrangement in which various channels from a plurality of channels λ₁-λ₁₆ are filtered out simultaneously coupled to different locations. Such compares with, for example, the inventive arrangement shown in Fig. 1, in which a plurality of channels are filtered out simultaneously for subsequent, individual filtering (within the sub-network).

It will be apparent to those skilled in the art that many changes and substitutions can be made to the embodiments of the optical fiber communication networks arrangements herein described without departing from the invention as defined by the appended claims.

## Claims

1. An optical communication network (10), comprising:
a plurality of network nodes (12); and
an optical transmission medium (14) coupled between at least one network node and least one other network node, wherein the optical transmission medium is capable of transmitting thereon the multiplexed optical information of a plurality of communication channels,
**CHARACTERIZED IN THAT**
at least one of the network nodes includes at least one multiple wavelength A/D module (M), wherein the multiple wavelength A/D module is configured to simultaneously drop a first group of communication channels from the optical transmission medium and/or simultaneously add a corresponding second group of communication channels to the optical transmission medium.

2. The network as recited in claim 1, further comprising at least one sub-network coupled to at least one of the network nodes having a multiple wavelength A/D module, wherein the sub-network is configured to simultaneously drop at least one communication channel from the first group of communication channels and/or to simultaneously add a corresponding communication channel to the first group of communication channels.

3. The network as recited in claim 2, wherein the at least one sub-network includes a plurality of sub-network nodes and an optical transmission medium coupled between the network node and at least one sub-network node.

4. The network as recited in claim 2, wherein the at least one sub-network further comprises a plurality of single wavelength-band A/D modules coupled to one of the multiple wavelength A/D modules in a ring architecture.

5. The network as recited in claim 1, further comprising at least one single bandwidth module coupled to at least one of the network nodes having a multiple wavelength A/D module.

6. An optical communication network (10), comprising:
a first network having a plurality of primary nodes (12) coupled to adjacent nodes via an optical transmission medium (14), wherein at least one of the primary nodes includes a multiple wavelength A/D module (M); and
at least one sub-network coupled to at least one of the primary nodes having a multiple wavelength A/D module,
**CHARACTERIZED IN THAT**
the primary node including a multiple wavelength A/D module is configured to drop a group of communication channels from the network to the sub-network coupled thereto and to add a corresponding second group of communication channels to the primary node from the sub-network coupled thereto.

7. The network as recited in claim 6, wherein the first group of communication channels includes a plurality of communication channels and the second group of communication channels includes a corresponding plurality of communication channels.

8. The network as recited in claim 6, wherein the at least one sub-network includes a plurality of secondary nodes and an optical transmission medium coupled between the primary node and at least one secondary node.

9. The network as recited in claim 6, wherein the at least one sub-network further comprises a plurality of single wavelength-band A/D modules coupled to one of the multiple wavelength A/D modules in a ring architecture.

10. The network as recited in claim 6, wherein the first group of communication channels includes a plurality of communication channels with a collective bandwidth greater than approximately 30 nanometers (nm) and the second group of communication channels includes a corresponding plurality of communication channels with a collective bandwidth of greater than approximately 30 nm.
